# FASCICULE DE BREVET EUROPEEN

(11) **EP 3 149 920 B1**
(45) Date de publication et mention de la délivrance du brevet: **13.05.2020**
(21) Numéro de dépôt: 15732788.3
(22) Date de dépôt: 22.05.2015
(51) Int. Cl.: H04L 29/08, H04L 12/28

(54) **TECHNIQUE DE MÉDIATION DANS UN RÉSEAU RÉSIDENTIEL**
TECHNIK ZUR VERMITTLUNG IN EINEM HEIMNETZWERK
TECHNIQUE FOR MEDIATION IN A RESIDENTIAL NETWORK

(30) Priorité: 30.05.2014 FR 1454940
(43) Date de publication de la demande: 05.04.2017
(73) Titulaire: Orange, 75015 Paris (FR)
(72) Inventeur: YAN, Han, 92800 Puteax (FR); FONTAINE, Fabrice, 35850 Geveze (FR)
(86) Numéro de dépôt international: PCT/FR2015/051365
(87) Numéro de publication internationale: WO 2015/181478

(56) Documents cités:
- EP-A2- 2 670 092
- WO-A1-2005/117389
- US-A1- 2010 161 823

## Description

L'invention se rapporte au domaine général des télécommunications.

L'invention concerne plus particulièrement une technique de médiation mise en œuvre par un dispositif de médiation dans un réseau résidentiel.

Un réseau résidentiel comprend des équipements ou dispositifs localisés dans un site client. Ces dispositifs sont également appelés CPE, pour « Customer Premise Equipment ». Pour un réseau local, il s'agit notamment de la passerelle d'accès, d'un décodeur TV « Set-Top-Box », d'un terminal mobile. Dans le contexte d'un réseau domotique, il s'agit également d'équipements d'électroménager, de systèmes d'alarme, de capteurs. Une passerelle d'accès permet aux dispositifs du réseau résidentiel d'accéder à un réseau de communication étendu WAN (pour « Wide Area Network »), tel que le réseau Internet.

L'association IEEE, pour « Institute of Electrical and Electronics Engineers », a défini une norme appelée IEEE 1905.1 visant à unifier au moyen d'une couche logicielle commune les diverses technologies réseau que l'on peut trouver au sein d'un même réseau résidentiel. Elle est prévue pour permettre une indépendance des applications et des protocoles de haut niveau vis-à-vis des technologies de réseaux résidentiels sous-jacentes. La norme IEEE 1905.1 prévoit trois types de technologies filaires : Ethernet IEEE 802.3, transmission des données sur le courant électrique IEEE 1901 (par exemple HomePlug®, Alliance HD-PLC) ou bien sur un câble coaxial Multimédia over Coax (MoCA®). La norme IEEE 1905.1 prévoit un seul type de technologie sans fil : IEEE 802.11 (Wi-Fi). La couche logicielle commune AL, pour « Abstraction Layer », également appelée couche de convergence », se positionne entre la couche réseau et la couche de liaison de données MAC, pour « Media Access Control ». Cette couche permet aux dispositifs d'échanger des messages de contrôle CMDU, pour « Control Message Data Unit ». Ainsi, des dispositifs comprenant cette couche logicielle et accédant au réseau résidentiel au moyen de technologies réseau différentes et de technologies de contrôle d'accès au media sous-jacentes peuvent communiquer entre eux.

La norme IEEE 1905.1 prévoit notamment des mécanismes permettant de découvrir la topologie des dispositifs du réseau résidentiel au moyen des messages de contrôle CMDU. La découverte de la topologie permet d'identifier quelles sont les liaisons du réseau qui sont partagées entre plusieurs dispositifs et d'obtenir des métriques telles que la bande passante totale et le taux d'occupation de cette bande passante sur les différentes liaisons du réseau. Il est par exemple possible de détecter que des données d'un flux TV entre le décodeur TV et la passerelle d'accès sont acheminées par l'intermédiaire de prises PLC (« Power Line Carrier »). Au niveau de la couche protocolaire IP, pour « Internet Protocol », il n'est pas possible de détecter la présence de ces prises dans l'acheminement des données. La norme IEEE 1905.1 permet également de commuter un flux de données d'un premier chemin à un deuxième chemin, par exemple en cas de dégradation du premier chemin, et ainsi d'augmenter la robustesse de la transmission des données dans le réseau résidentiel. La capacité globale du réseau résidentiel peut également être augmentée par une répartition des différents flux à acheminer sur les différentes liaisons disponibles.

On constate qu'une seule technologie sans fil associée à une technique de contrôle d'accès au media est actuellement prévue dans la norme IEEE 1905.1. Or, de nombreux dispositifs sont actuellement disponibles pour être intégrés dans un réseau résidentiel et certains d'entre eux disposent d'une technologie sans fil différente. A titre d'exemples illustratifs, il s'agit de technologies ZigBee, RFID (pour « Radio Frequency Identification »), DECT ULE (pour « Digital Enhanced Cordless Telephone Ultra Low Energy ») ou BLE (pour « Bluetooth Low Energy »). La couche logicielle AL n'est par conséquent pas prévue sur ce type de dispositif.

Il est ainsi impossible de bénéficier des avantages procurés par la norme IEEE 1905.1, notamment au niveau de l'abstraction offerte vis-à-vis des technologies réseau sous-jacentes permettant en particulier d'obtenir une vision complète de la topologie du réseau résidentiel.

Le document WO2015/117389 décrit une plateforme permettant d'offrir à une application de manipuler des dispositifs d'un réseau résidentiel au moyen d'une couche d'abstraction.

Un des buts de l'invention est de remédier à des insuffisances/inconvénients de l'état de la technique et/ou d'y apporter des améliorations.

Selon un premier aspect, l'invention a pour objet un procédé de médiation mis en œuvre par un premier dispositif dans un réseau résidentiel. Un module logiciel d'abstraction offrant un service d'abstraction d'une technique de contrôle d'accès au media sous-jacente est exécuté par le premier dispositif. Le procédé comprend les étapes de :
- réception d'une demande d'attachement au réseau résidentiel en provenance d'un deuxième dispositif par l'intermédiaire d'un canal de communication sans fil ;
- vérification d'une aptitude du deuxième dispositif à exécuter le module logiciel d'abstraction ;
- lorsque le deuxième dispositif n'est pas apte à exécuter ledit module logiciel, exécution du module logiciel d'abstraction par le premier dispositif en tant que mandataire du deuxième dispositif.

Ainsi, grâce au dispositif de médiation jouant un rôle de mandataire d'un dispositif non conforme, le dispositif non compatible avec les technologies réseau sous-jacentes définies par la norme IEEE 1905.1 peut être intégré dans le réseau résidentiel conforme à cette norme et bénéficier ainsi des avantages que procure cette norme.

Seul le dispositif de médiation jouant le rôle du mandataire du dispositif non conforme est modifié pour mettre en œuvre le procédé. Les autres dispositifs du réseau résidentiel IEEE 1905.1 ne sont pas modifiés et peuvent échanger des données avec le dispositif non conforme par l'intermédiaire du dispositif de médiation.

Toute technologie réseau sous-jacente non supportée par la norme IEEE 1905.1 et la technologie de contrôle d'accès au média associée peuvent être prises en charge dans le réseau. Il peut s'agir de ZigBee, RFID, DECT ULE, BLE ...

La prise en charge de nouvelles technologies réseau dans la norme IEEE 1905.1 est ainsi facilitée sans nécessiter de modifications importantes de la norme.

Les différents modes ou caractéristiques de réalisation mentionnés ci-après peuvent être ajoutés indépendamment ou en combinaison les uns avec les autres, aux étapes du procédé de médiation tel que défini précédemment.

Il a par ailleurs été constaté par les inventeurs que la norme IEEE 1905.1 prévoit une adresse MAC identifiant un dispositif selon un format particulier de 48 bits. Or de nombreux dispositifs qu'il serait souhaitable d'intégrer dans le réseau IEEE 1905.1 ne disposent pas de la technologie réseau sous-jacente requise mais de plus sont identifiés par une adresse MAC de longueur différente, par exemple 16 ou 64 bits.

Dans un mode de réalisation particulier, le procédé comprend en outre une étape d'allocation d'une adresse identifiant le deuxième dispositif dans le réseau résidentiel selon un format compatible avec l'exécution du module logiciel, préalablement à la dite exécution du module logiciel en tant que mandataire du deuxième dispositif.

Ainsi, grâce à l'allocation d'une adresse dans un format compatible avec la norme IEEE 1905.1, l'intégration du dispositif non conforme est facilitée. Le dispositif de médiation met alors en œuvre une fonction de translation entre l'adresse d'origine identifiant le dispositif non conforme et l'adresse allouée. L'utilisation d'une adresse allouée conforme permet de ne pas modifier les dispositifs conformes à la norme IEEE 1905.1.

Dans un mode de réalisation particulier, lorsqu'un troisième dispositif demandant à s'attacher au réseau résidentiel est apte à exécuter le module logiciel d'abstraction, le procédé comprend en outre une étape de vérification qu'une adresse identifiant le troisième dispositif dans le réseau résidentiel est distincte de l'adresse allouée au deuxième dispositif.

Un conflit d'adresse peut se produire lorsqu'un nouveau dispositif demande à joindre le réseau résidentiel. La vérification permet ainsi de détecter un conflit d'adresse éventuel.

Selon une caractéristique particulière, le nouveau dispositif n'est pas autorisé à rejoindre le réseau résidentiel.

Alternativement, selon une caractéristique particulière, lorsqu'un troisième dispositif demandant à s'attacher au réseau résidentiel est apte à exécuter le module logiciel d'abstraction, le procédé comprend en outre une étape de vérification qu'une adresse identifiant le troisième dispositif dans le réseau résidentiel est distincte de l'adresse allouée au deuxième dispositif, et dans le cas contraire, une étape d'allocation d'une nouvelle adresse au deuxième dispositif.

Grâce à l'allocation d'une nouvelle adresse, le dispositif non conforme peut continuer à être intégré dans le réseau résidentiel et le nouveau dispositif peut rejoindre le réseau.

Selon une caractéristique particulière, la nouvelle adresse allouée est utilisée lors de l'exécution du module logiciel en tant que mandataire du deuxième dispositif.

L'adresse qui avait été allouée en premier au dispositif non conforme n'est plus utilisée pour l'identifier.

Selon une caractéristique particulière, la nouvelle adresse allouée est diffusée au troisième dispositif.

Ceci permet d'informer les dispositifs du réseau résidentiel, qui peuvent ensuite mettre à jour les informations de topologie du réseau et communiquer avec le dispositif non conforme au moyen de la nouvelle adresse allouée.

Alternativement, des données reçues par le premier dispositif à destination d'un dispositif identifié par ladite adresse sont dupliquées vers les deuxième et troisième dispositifs.

Le dispositif de médiation a ainsi la garantie que les données destinées à un des deux dispositifs, le dispositif ayant généré le conflit et le dispositif non conforme, vont bien arriver à destination.

Selon un deuxième aspect, l'invention concerne également un dispositif de médiation appartenant à un réseau résidentiel. Ce dispositif comprend :
- un module logiciel d'abstraction offrant un service d'abstraction d'une technique de contrôle d'accès au media sous-jacente :
- un module de réception, agencé pour recevoir une demande d'attachement au réseau résidentiel en provenance d'un deuxième dispositif par l'intermédiaire d'un canal de communication sans fil ;
- un module de vérification, agencé pour vérifier si le deuxième dispositif est apte à exécuter ledit module logiciel d'abstraction ;
- un module de commande, agencé pour déclencher une exécution du module logiciel d'abstraction par le dispositif de médiation en tant que mandataire du deuxième dispositif, lorsque le deuxième dispositif n'est pas apte à exécuter ledit module logiciel d'abstraction.

Dans un mode de réalisation particulier, le module de commande est également agencé pour allouer une adresse pour identifier le deuxième dispositif dans le réseau résidentiel selon un format compatible avec l'exécution du module logiciel d'abstraction, préalablement à l'exécution du module logiciel en tant que mandataire du deuxième dispositif.

Les avantages énoncés pour le procédé de médiation selon le premier aspect sont transposables directement au dispositif de médiation.

Dans un mode de réalisation particulier, le dispositif de médiation est agencé en outre pour permettre un accès à un réseau étendu à au moins un dispositif du réseau résidentiel.

Un tel dispositif est une passerelle d'accès. On bénéficie ainsi de la position centrale de la passerelle d'accès, du fait de l'accès au réseau de communication étendu.

Selon un troisième aspect, l'invention concerne également un système de réseau résidentiel comprenant au moins un dispositif de médiation selon le deuxième aspect et un dispositif comprenant un module d'interface, agencé pour envoyer et recevoir des données par l'intermédiaire du canal de communication sans fil.

Les avantages énoncés pour le procédé de médiation selon le premier aspect sont transposables directement au système de réseau résidentiel.

Selon un quatrième aspect, l'invention concerne un programme pour un dispositif de médiation, comprenant des instructions de code de programme destinées à commander l'exécution des étapes du procédé de médiation selon le premier aspect mises en œuvre par le dispositif de médiation, lorsque ce programme est exécuté par ce dispositif et un support d'enregistrement lisible par un dispositif sur lequel est enregistré un programme pour un dispositif.

Les avantages énoncés pour le procédé de médiation selon le premier aspect sont transposables directement au programme pour un dispositif de médiation et au support d'enregistrement.

L'invention sera mieux comprise à l'aide de la description suivante de modes de réalisation particuliers de la technique de médiation, en référence aux dessins annexés sur lesquels :
- la figure 1 représente un réseau résidentiel dans son environnement selon un mode particulier de réalisation ;
- les figures 2a-2b illustrent des étapes d'un procédé de médiation selon un mode particulier de réalisation ;
- les figures 3a-3c représentent schématiquement des couches protocolaires de dispositifs du réseau résidentiel selon un mode particulier de réalisation ;
- la figure 4 représente un dispositif de médiation selon un mode particulier de réalisation.

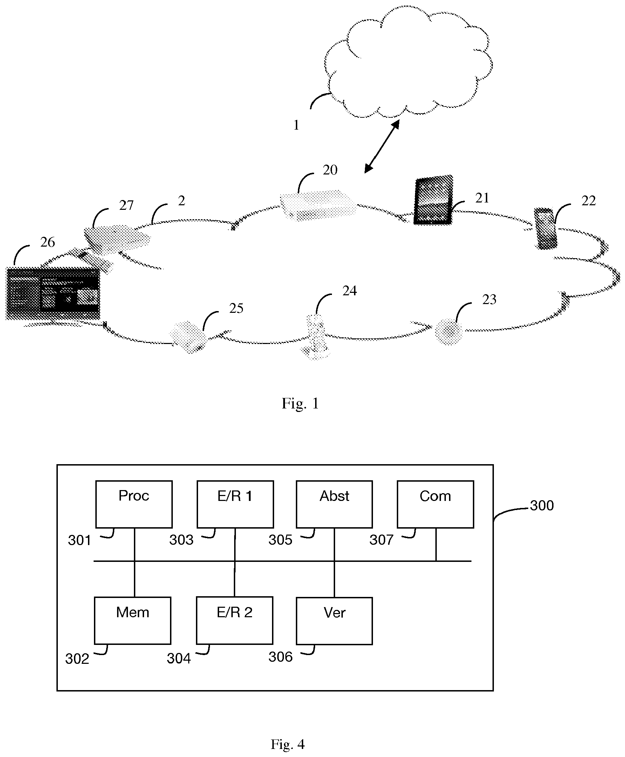

La figure 1 représente, dans son environnement, un réseau de communication privé ou résidentiel 2. Une passerelle d'accès 20 permet à des dispositifs du réseau local 2 d'accéder à un réseau de communication étendu 1 ou WAN (pour « Wide Area Network »), tel que le réseau Internet.

Le réseau résidentiel s'appuie sur diverses technologies réseau, telles qu'un réseau filaire de type Ethernet selon la norme IEEE 802.3, un réseau sans fil de type Wi-Fi selon la norme IEEE 802.11 ou bien encore un réseau par courant porteur en ligne PLC (par exemple HomePlug ®, Alliance HD-PLC) selon la norme IEEE 1901, ou bien encore un réseau pour câble coaxial de type MoCA®, pour « Multimédia over Coax ». Une technique de contrôle d'accès au média est associée à la technique réseau. Pour prendre en charge ces différentes technologies réseau, la passerelle d'accès 20 comprend une couche logicielle conforme à la norme IEEE 1905.1 permettant d'unifier l'accès à ces différentes technologies réseau. Cette couche logicielle d'abstraction offre un service d'abstraction d'une technologie de contrôle d'accès au media sous-jacente.

La norme IEEE 1905.1 a été publiée en avril 2013 et commence à être implémentée dans les différents équipements de l'environnement domestique digital sous la dénomination commerciale nVoy.

Les dispositifs du réseau local 2 peuvent être n'importe quels dispositifs, par exemple domestiques, disposant d'une connexion réseau filaire ou sans-fil. Il peut s'agir par exemple d'une tablette tactile 21, d'un téléphone mobile 22, d'un capteur 23, d'un téléphone fixe 24, d'une prise PLC 25, d'une télévision 26, d'un décodeur TV 27 (« Set-Top Box »), d'une console de jeux, de dispositifs électroménagers, etc.

Par la suite, on se place dans le cas particulier où l'ensemble des dispositifs du réseau local 2 sont conformes à la norme IEEE 1905.1, à l'exception du dispositif 23.

Ce dispositif 23 dispose d'une interface de communication s'appuyant sur une technologie réseau non supportée par la norme IEEE 1905.1. Il s'agit par exemple du protocole ZigBee, tel que défini par l'Alliance ZigBee. Le protocole Zigbee est un protocole de haut niveau s'appuyant sur la norme IEEE 802.15.4 pour les couches basses. Aucune limitation n'est attachée à cette technologie particulière. Il peut également s'agir de RFID (pour « Radio-frequency identification »), de DECT ULE (pour « Digital Enhanced Cordless Telecommunications- Ultra Low Energy »), de BLE (pour « Bluetooth Low Energy ») ...

Ce dispositif 23 est par exemple un capteur de détection de présence.

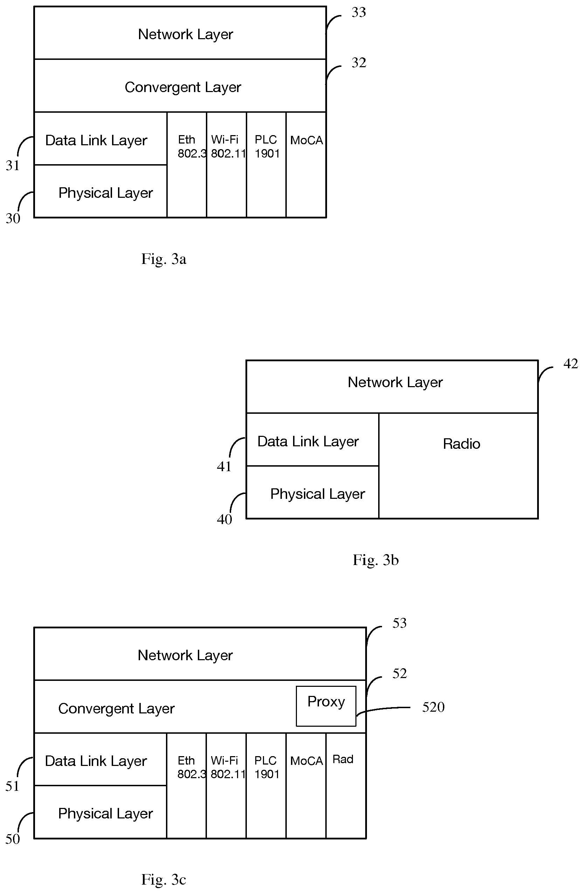

La figure 3a représente la structure sous forme de couches OSI d'un des dispositifs 21-22, 24-27 du réseau résidentiel 2. Une première couche 30 de niveau OSI 1 correspond à la couche physique. Elle s'appuie sur les technologies réseau décrites précédemment (Ethernet, Wi-Fi, PLC, MoCA). Il est ici souligné qu'il n'est pas nécessaire que ce dispositif soit apte à mettre en œuvre l'ensemble de ces technologies réseau. Une seule d'entre elles peut suffire s'il existe des dispositifs intercalaires de type pont (« bridge »). Une deuxième couche 31 de niveau OSI 2 correspond à la couche de contrôle d'accès au média MAC (pour « Media Access Control). Une troisième couche 32 de niveau intermédiaire entre le niveau OSI 2 et le niveau OSI 3 (également appelée couche de niveau OSI 2,5 par abus de langage) correspond à la couche logicielle de convergence ou «Abstraction Layer », telle que définie dans la norme IEEE 1905.1. Cette troisième couche logicielle 32 offre un service d'abstraction d'une technologie de contrôle d'accès au media sous-jacente et permet aux dispositifs du réseau local d'échanger des messages particuliers au moyen de la deuxième couche 31 lors de l'exécution d'un module logiciel d'abstraction. Ces messages particuliers sont des unités de données de messages de contrôle CMDU pour « Control Message Data Unit ». Ces messages de contrôle permettent à des dispositifs ne disposant pas de la même couche physique 30 de communiquer entre eux sans avoir besoin d'une couche IP (« pour « Internet Protocol »). Il est ainsi possible de détecter qu'un flux TV entre le décodeur TV 27 et la passerelle d'accès 20 transite par la prise PLC 25 par exemple, ce qui n'est pas visible au niveau IP. Une quatrième couche 33 de niveau OSI 3 correspond à la couche réseau.

Les messages de contrôle CMDU permettent notamment à ces dispositifs d'obtenir la topologie du réseau résidentiel 2 et d'accéder à des métriques de performance sur ce réseau, comme par exemple la bande passante et/ou le taux d'utilisation de cette bande passante sur chaque lien ou segment du réseau. Différents types de messages de contrôle CMDU sont prévus :
- un message de découverte « Discovery », permettant de détecter des dispositifs directement voisins supportant la norme IEEE 1905.1 ;
- un message de notification « Notification », permettant d'informer les dispositifs d'une modification de topologie ;
- un message de requête « Query », permettant d'obtenir la base de données topologique d'un autre dispositif par un message de réponse « Response ».

La couche logicielle de convergence utilise pour identifier les dispositifs supportant la norme IEEE 1905.1 une adresse unique sous le format EUI-48™, pour « Extended Unique Identifier-48 ». Cette adresse EUI-48 est de longueur 48 bits et comprend un identifiant unique d'une organisation (sur 24 bits) et un identifiant du dispositif (sur 24 bits également). Ainsi, chaque dispositif 21-22, 24-27 du réseau résidentiel 2 est identifié par une adresse unique de longueur 48 bits.

La figure 3b représente la structure sous forme de couches OSI du dispositif 23, ne supportant pas la norme IEEE 1905.1. Une première couche 40 de niveau OSI 1 correspond à la couche physique. Elle s'appuie sur une technologie réseau non supportée par la norme IEEE 1905.1, par exemple Zigbee. Une deuxième couche 41 de niveau OSI 2 correspond à la couche de contrôle d'accès au média MAC. Une troisième couche 42 de niveau OSI 3 correspond à la couche réseau. Le dispositif 23 est identifié par une adresse dont le format dépend de la technologie réseau supportée par ce dispositif. Ainsi, lorsque cette technologie réseau est Zigbee, l'adresse MAC peut être de longueur 16 (adresse courte) ou 64 bits (adresse étendue).

La figure 3c représente la structure sous forme de couches OSI de la passerelle d'accès 20. Une première couche 50 de niveau OSI 1 correspond à la couche physique. Elle s'appuie sur les technologies réseau décrites précédemment (Ethernet, Wi-Fi, PLC, MoCA). Une deuxième couche 51 de niveau OSI 2 correspond à la couche de contrôle d'accès au média MAC. Une troisième couche 52 de niveau intermédiaire entre le niveau OSI 2 et le niveau OSI 3 correspond à la couche logicielle d'abstraction, telle que définie dans la norme IEEE 1905.1. Cette troisième couche logicielle 52 permet à la passerelle d'accès d'échanger des messages de contrôle CMDU avec les dispositifs du réseau local lors de l'exécution d'un module logiciel d'abstraction. Dans un mode de réalisation particulier, la troisième couche logicielle 52 comprend un module logiciel 520 mandataire permettant une exécution du module logiciel d'abstraction en tant que mandataire d'un dispositif non conforme à la norme IEEE 1905.1, par exemple le dispositif 23. Une quatrième couche 53 de niveau OSI 3 correspond à la couche réseau. La passerelle d'accès 20 est également identifiée par une adresse unique EUI-48 de longueur 48 bits.

Le module logiciel mandataire 520 est prévu dans ce mode de réalisation particulier au niveau de la passerelle d'accès 20. Cette mise en œuvre au niveau de la passerelle d'accès 20 est avantageuse du fait de la situation privilégiée de la passerelle d'accès 20 dans le réseau résidentiel 2. Toutefois, aucune limitation n'est attachée à cette localisation. Dans un autre mode de réalisation, le module logiciel mandataire est prévu au niveau d'un des autres dispositifs 21-22, 24-27 du réseau résidentiel 2.

La technique de médiation prévoit de mettre en œuvre un dispositif de médiation permettant à des dispositifs non conformes à la norme IEEE 1905.1 de joindre le réseau résidentiel. Dans un mode de réalisation particulier, leurs adresses MAC sont également non conformes à ce qui est attendu dans la norme IEEE 1905.1 et sont prises en charge par le dispositif de médiation.

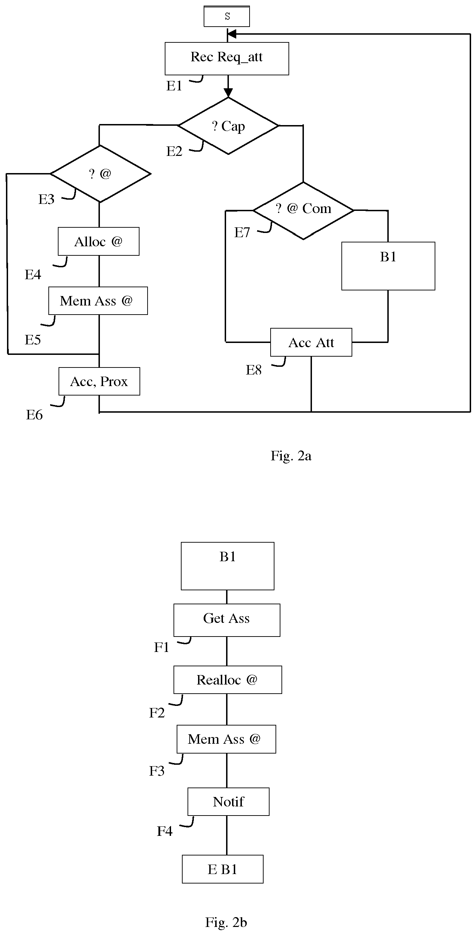

Nous allons maintenant décrire la technique de médiation dans un mode particulier de réalisation, telle qu'elle est mise en œuvre par la passerelle d'accès 20 en relation avec les figures 2a et 2b. On rappelle que dans le mode de réalisation décrit ici la passerelle d'accès 20 comprend un module logiciel mandataire 520 permettant une exécution de la couche logicielle 52 en tant que mandataire d'un dispositif non conforme à la norme IEEE 1905.1. La description est applicable pour tout dispositif de médiation, apte à jouer le rôle de dispositif mandataire.

La figure 2a représente des étapes mises en œuvre par la passerelle d'accès 20 lorsqu'un dispositif demande à rejoindre le réseau résidentiel 2.

La passerelle d'accès 20 met en œuvre une boucle d'attente pour détecter si un dispositif demande à rejoindre le réseau 2.

Dans une étape E1, la passerelle d'accès 20 reçoit une demande d'attachement au réseau 2 en provenance d'un dispositif par l'intermédiaire d'un canal de communication sans fil.

Lorsque le dispositif est conforme à la norme IEEE 1905.1, cette demande correspond à un message de contrôle CMDU « Notification ». Cette demande est par exemple envoyée par un des dispositifs 21-22, 24-27 décrit précédemment

Lorsque le dispositif n'est pas conforme à la norme IEEE 1905.1, cette demande correspond par exemple à un message de découverte de route RREQ « Route Request » selon le protocole de routage AODV, pour « Ad hoc On Demand Distance Vector ». Cette demande est par exemple envoyée par le dispositif 23 décrit précédemment.

Dans une étape E2, la passerelle d'accès 20 vérifie si le dispositif demandant à rejoindre le réseau 2 est apte à exécuter la couche logicielle d'abstraction. Plus précisément, il s'agit de vérifier si la demande reçue à l'étape E1 est un message de contrôle CMDU ou non.

Lorsque le dispositif 23 n'est pas apte à exécuter la couche logicielle d'abstraction AL, la passerelle d'accès 20 va alors exécuter (étape E6) la couche logicielle AL en tant que mandataire du dispositif 23, au moyen du module logiciel mandataire 520. La passerelle d'accès 20 contribue alors à l'intégration du dispositif 23 dans le réseau résidentiel 2 en diffusant des messages de contrôle CMDU relatifs au dispositif 23. Le dispositif 23 est alors accessible des autres dispositifs conformes à la norme IEEE 1905.1 par l'intermédiaire de la passerelle d'accès 20. La passerelle d'accès 20 met en œuvre une fonction de translation entre l'adresse d'origine identifiant le dispositif 23 non conforme et l'adresse allouée. Des données reçues par la passerelle d'accès 20 à destination du dispositif 23 identifié par l'adresse MAC allouée lui sont transmises. Réciproquement, la passerelle d'accès 20 sert de relais pour transmettre des données émises par le dispositif 23 vers les dispositifs 21-22, 24-27 conformes à la norme IEEE 1905.1. Ainsi, par la mise en œuvre d'un module logiciel mandataire, un dispositif conforme à la norme IEEE 1905.1 peut jouer un rôle de mandataire pour un dispositif non conforme. Le dispositif non conforme est ainsi visible des autres dispositifs du réseau 2. Une vision d'ensemble de la topologie du réseau 2 peut ainsi être obtenue par tous les dispositifs conformes à la norme IEEE 1905.1.

Lorsque le dispositif 21-22, 24-27 est apte à exécuter la couche logicielle AL, dans une étape E8, la passerelle d'accès 20 mémorise dans une base de données de topologie les informations reçues de ce dispositif.

On se place par la suite dans un mode de réalisation particulier comprenant une gestion des adresses dans le réseau 2, ce mode de réalisation permettant d'accueillir un dispositif non conforme à la norme IEEE 1905.1 et identifié par une adresse de format différent de EUI-48. Par exemple, le dispositif 23, non conforme à la norme IEEE 1905.1, dispose d'une adresse MAC l'identifiant, qui n'est pas codée sur 48 bits conformément au format EUI-48. Cette adresse MAC est appelée adresse d'origine et notée par la suite MAC_Ori.

Dans ce cas, lorsqu'à l'étape E2, il a été vérifié que le dispositif 23 n'est pas apte à exécuter la couche logicielle AL, dans une étape E3, la passerelle d'accès 20 vérifie si le dispositif non conforme à la norme IEEE 1905.1 dispose d'une adresse sur 48 bits au format EUI-48. Lorsque ce n'est pas le cas, dans une étape d'allocation E4, la passerelle d'accès 20 alloue une adresse identifiant le dispositif 23 dans le réseau 2 selon un format compatible avec l'exécution de la couche logicielle. Plus précisément, il s'agit d'une adresse MAC EUI-48, notée par la suite MAC_Gen. Cette adresse MAC_Gen est sélectionnée de telle sorte qu'elle ne coïncide pas avec une adresse identifiant un des dispositifs du réseau 2. Elle peut être affectée de manière aléatoire, générée à partir de l'adresse MAC_Ori par troncature ou bien par extension. Aucune limitation n'est associée à la manière dont cette adresse MAC_Gen est créée.

Dans une étape E5, la passerelle d'accès 20 mémorise une association entre l'adresse d'origine MAC_Ori et l'adresse allouée MAC_Gen pour le dispositif 23.

A l'étape E6, la passerelle d'accès 20 exécute la couche logicielle AL en tant que mandataire du dispositif 23 et en utilisant l'adresse MAC_Gen allouée au dispositif 23.

La passerelle d'accès 20 retourne ensuite en attente de réception d'une demande d'un dispositif pour rejoindre le réseau 2. Il a été ainsi possible d'intégrer dans le réseau résidentiel un dispositif non conforme à la norme IEEE 1905.1 et ne disposant pas d'une adresse MAC conforme à cette norme.

Toujours dans ce mode de réalisation particulier, lorsqu'à l'étape E2 la passerelle d'accès 20 identifie que le dispositif 21-22, 24-27 est apte à exécuter la couche logicielle AL, dans une étape E7, la passerelle d'accès 20 vérifie qu'il n'existe pas de conflit d'adresse pour l'adresse identifiant ce dispositif. Ceci peut notamment être le cas pour une adresse MAC_Gen allouée à l'étape E4, ou bien réallouée lors d'une étape F2 décrite ultérieurement, à un dispositif non conforme à la norme IEEE 1905.1 et ne disposant pas d'une adresse EUI-48. L'étape E7 consiste ainsi à vérifier que l'adresse identifiant le dispositif demandant à se joindre est distincte d'une adresse allouée à un dispositif non conforme à la norme IEEE 1905.1.

Lorsqu'il n'y a pas de conflit d'adresse, la passerelle d'accès 20 met en œuvre l'étape E8 décrite précédemment. La passerelle d'accès 20 retourne ensuite en attente de réception d'une demande d'un dispositif pour rejoindre le réseau 2.

Lorsqu'il y a un conflit d'adresse, la passerelle d'accès 20 met en œuvre un ensemble d'étapes permettant de réallouer une adresse au dispositif 23 non conforme à la norme IEEE 1905.1. Cet ensemble d'étapes va maintenant être décrit en relation avec la figure 2b.

Dans une étape F1, la passerelle d'accès 20 obtient l'adresse d'origine MAC_Ori associée à l'adresse pour laquelle il existe un conflit. Cette association a été mémorisée par la passerelle d'accès 20 lors de l'exécution de l'étape E5.

A l'étape F2, la passerelle d'accès 20 alloue une nouvelle adresse MAC_Gen2 au dispositif identifié par l'adresse d'origine MAC_Ori. Cette nouvelle allocation s'effectue de manière similaire à l'allocation réalisée à l'étape E4.

Dans une étape F3, la passerelle d'accès 20 mémorise une association entre l'adresse d'origine MAC_Ori et l'adresse allouée MAC_Gen2 pour le dispositif 23 identifié par l'adresse d'origine MAC_Ori.

Dans une étape F4, la passerelle d'accès 20 notifie les dispositifs conformes à la norme IEEE 1905.1 de la nouvelle adresse MAC_Gen2 allouée au dispositif non conforme pour lequel elle joue un rôle de mandataire. Plus précisément, la passerelle d'accès 20 transmet un nouveau message de contrôle CMDU MAC_Change_Request, indiquant que le dispositif identifié par l'adresse MAC_Gen est désormais identifié par l'adresse MAC_Gen2. Un nouveau type de message CMDU « Message Type » peut être associé à ce message. Il est également possible d'utiliser un type de message indiquant un message spécifique à un constructeur avec un « Message Type » prenant la valeur 0x0004. Ceci permet aux dispositifs conformes à la norme IEEE 1905.1 de mettre à jour les informations de topologie qu'ils ont mémorisées. Par la suite, lors de l'exécution de la couche logicielle AL en tant que mandataire du dispositif 23, la passerelle d'accès 20 utilise la nouvelle adresse MAC_Gen2 allouée au dispositif 23.

La passerelle d'accès 20 retourne ensuite en attente de réception d'une demande d'un dispositif pour rejoindre le réseau 2.

Dans une variante à ce mode de réalisation, une fois la nouvelle adresse MAC_Gen2 allouée (étape F2) et l'association mémorisée (étape F3), la passerelle d'accès 20 ne diffuse pas la nouvelle adresse mais duplique les données reçues à destination d'un dispositif identifié par l'adresse MAC_Gen vers le dispositif 23 non conforme à la norme IEEE 1905.1 auquel cette adresse était précédemment associée et vers le dispositif 21-22, 24-27, pour lequel le conflit d'adresse a été détecté à l'étape E7. Dans cette variante, une suppression des données reçues à tort est effectuée par le niveau applicatif du dispositif non concerné par ces données.

A titre d'exemple illustratif, un utilisateur Romain dispose dans son habitation d'un réseau conforme à la norme IEEE 1905.1. Ce réseau comprend une passerelle d'accès, des prises PLC. Romain veut adjoindre à ce réseau un équipement informatique PC1 muni d'une clé électronique offrant un accès Zigbee (« dongle » Zigbee), d'adresse MAC sur 16 bits 0x25F5. La passerelle d'accès détecte que cet équipement informatique PC1 demande de rejoindre le réseau. La passerelle d'accès lui alloue alors une première adresse MAC EUI-48 00-50-56-C0-00-01. L'équipement informatique PC1 peut alors communiquer avec les autres dispositifs présents dans le réseau IEEE 1905. Ultérieurement, un autre équipement informatique PC2 comprenant une interface Ethernet, d'adresse MAC 00-50-56-C0-00-01, rejoint le réseau. Il y a alors un conflit d'adresse. La passerelle d'accès met en attente cet autre équipement informatique PC2 afin de gérer le conflit d'adresse, en allouant une nouvelle adresse au premier équipement PC1. Une fois la nouvelle adresse allouée, l'équipement PC2 peut communiquer avec les autres dispositifs du réseau IEEE 1905.

Cette nouvelle adresse peut être notifiée aux autres dispositifs. Dans ce cas, les données destinées à l'équipement PC1 sont redirigées vers la nouvelle adresse allouée.

Dans la variante décrite précédemment, les données avec comme adresse de destination la première adresse MAC sont dirigées à la fois vers le premier équipement informatique PC1 et vers le deuxième équipement informatique PC2. L'équipement non concerné ne traite alors pas ces données et ignore par exemple une demande visant à parcourir une liste de fichiers multimédia.

Nous allons maintenant décrire un dispositif de médiation 300 dans un mode particulier de réalisation en référence à la figure 4. Un tel dispositif comprend notamment :
- une zone mémoire 302, agencée pour mémoriser une application qui comprend des instructions de code pour mettre en œuvre les étapes du procédé de médiation, tel que décrit précédemment ;
- une mémoire de stockage, non représentée, agencée pour stocker des données utilisées lors de la mise en œuvre du procédé de médiation :
- un processeur 301 pour exécuter des instructions de code de modules logiciels ;
- un premier module d'interface 303, agencé pour envoyer et recevoir des données conformément à une première technologie réseau ;
- un deuxième module d'interface 304, agencé pour envoyer et recevoir des données conformément à une deuxième technologie réseau radio, notamment pour recevoir une demande d'attachement au réseau résidentiel en provenance d'un deuxième dispositif par l'intermédiaire d'un canal de communication sans fil ;
- un module logiciel 305 d'abstraction, correspondant à la couche logicielle d'abstraction AL, agencé pour offrir un service d'abstraction d'une technologie de contrôle d'accès au media sous-jacente pour le premier module d'interface 303 ;
- un module de vérification 306, agencé pour vérifier si le deuxième dispositif est apte à exécuter le module logiciel d'abstraction ;
- un module de commande 307, agencé pour déclencher une exécution du module logiciel d'abstraction par le dispositif de médiation en tant que mandataire du deuxième dispositif, lorsque le deuxième dispositif n'est pas apte à exécuter le module logiciel d'abstraction.

Le module logiciel 305 d'abstraction comprend notamment le module logiciel mandataire 520 permettant une exécution de la couche logicielle d'abstraction en tant que mandataire d'un dispositif non conforme à la norme IEEE 1905.1.

Le premier module d'interface 303 est par exemple un module d'interface Ethernet, un module d'interface radio WiFi, un module d'interface PLC ou MoCA. Dans un mode de réalisation particulier, le dispositif de médiation comprend plusieurs premiers modules d'interface 303.

Le deuxième module d'interface 304 est par exemple un module d'interface radio Zigbee, non supporté par la norme IEEE 1905.1.

La mémoire de stockage est notamment agencée pour mémoriser une base de données de topologie du réseau résidentiel ainsi que des métriques de liens du réseau.

Le module logiciel 305 s'exécutant en tant que mandataire du deuxième dispositif est notamment agencé pour :
- acheminer des données reçues au moyen du deuxième module d'interface 304 vers leur destination dans le réseau résidentiel ou le réseau étendu, et réciproquement ;
- communiquer des messages de contrôle de topologie relatifs au deuxième dispositif ainsi que des messages de métriques de liens.

Dans un mode de réalisation particulier, le module de commande 307 est agencé pour allouer une adresse identifiant le deuxième dispositif dans le réseau résidentiel selon un format compatible avec l'exécution du module logiciel 305, préalablement à l'exécution du module logiciel en tant que mandataire du deuxième dispositif, lorsque celui-ci ne dispose pas d'une adresse conforme. Dans ce mode de réalisation, le module logiciel d'abstraction 305 met en œuvre une fonction de translation d'adresse en modifiant l'adresse d'origine identifiant le deuxième dispositif en l'adresse allouée dans les données reçues et réciproquement. La mémoire de stockage est alors agencée pour mémoriser une association entre l'adresse allouée et l'adresse d'origine identifiant le deuxième dispositif pour le deuxième module d'interface 304.

Selon une caractéristique particulière, le module de vérification 306 est en outre agencé pour vérifier qu'une adresse identifiant un troisième dispositif demandant à s'attacher au réseau résidentiel par l'intermédiaire du premier module d'interface 303 est distincte de l'adresse allouée au deuxième dispositif. Dans le cas contraire, il y a un conflit d'adresse.

Selon une caractéristique particulière, le module de commande 307 est également agencé pour allouer une nouvelle adresse au deuxième dispositif en cas de conflit d'adresse.

Dans un mode de réalisation particulier, le module de commande 307 est agencé pour commander une diffusion de la nouvelle adresse allouée dans le réseau résidentiel.

Selon une caractéristique particulière, le module de commande 307 est agencé pour commander une émission de données destinées à un dispositif identifié par l'adresse ayant déclenchée le conflit d'adresse vers le deuxième dispositif au moyen du deuxième module d'interface 304 et vers le troisième dispositif au moyen du premier module d'interface 303.

La technique de médiation est mise en œuvre au moyen de composants logiciels et/ou matériels. Dans cette optique, le terme "module" peut correspondre dans ce document aussi bien à un composant logiciel, qu'à un composant matériel ou à un ensemble de composants matériels et/ou logiciels, apte à mettre en œuvre une fonction ou un ensemble de fonctions, selon ce qui est décrit précédemment pour le module concerné.

Un composant logiciel correspond à un ou plusieurs programmes d'ordinateur, un ou plusieurs sous-programmes d'un programme, ou de manière plus générale à tout élément d'un programme ou d'un logiciel. Un tel composant logiciel est stocké en mémoire puis chargé et exécuté par un processeur de données d'une entité physique et est susceptible d'accéder aux ressources matérielles de cette entité physique (mémoires, supports d'enregistrement, bus de communication, cartes électroniques d'entrées/sorties, interfaces utilisateur, etc).

De la même manière, un composant matériel correspond à tout élément d'un ensemble matériel (ou hardware). Il peut s'agir d'un composant matériel programmable ou non, avec ou sans processeur intégré pour l'exécution de logiciel. Il s'agit par exemple d'un circuit intégré, d'une carte à puce, d'une carte électronique pour l'exécution d'un micrologiciel (firmware), etc.

Dans un mode de réalisation particulier, les modules 305, 306, 307 sont agencés pour mettre en œuvre le procédé de médiation précédemment décrit. Il s'agit de préférence de modules logiciels comprenant des instructions logicielles pour faire exécuter les étapes du procédé de médiation précédemment décrit, mises en œuvre par un dispositif de médiation. L'invention concerne donc aussi :
- un programme pour un dispositif de médiation, comprenant des instructions de code de programme destinées à commander l'exécution des étapes du procédé de médiation précédemment décrit, lorsque ledit programme est exécuté par ce dispositif de médiation ;
- un support d'enregistrement lisible par un dispositif de médiation sur lequel est enregistré le programme pour un dispositif de médiation.

Les modules logiciels peuvent être stockés dans ou transmis par un support de données. Celui-ci peut être un support matériel de stockage, par exemple un CD-ROM, une disquette magnétique ou un disque dur, ou bien un support de transmission tel qu'un signal électrique, optique ou radio, ou un réseau de télécommunication.

L'invention concerne également un système de réseau résidentiel comprenant au moins un dispositif de médiation tel que décrit précédemment et un dispositif comprenant un module d'interface, agencé pour envoyer et recevoir des données conformément à la deuxième technologie réseau radio.

## Revendications

1. Procédé de médiation mis en œuvre par un premier dispositif (20) dans un réseau résidentiel (2), un module logiciel d'abstraction offrant un service d'abstraction d'une technique de contrôle d'accès au media sous-jacente étant exécuté par le premier dispositif, ledit procédé comprenant les étapes de :
- réception (E1) d'une demande d'attachement au réseau résidentiel en provenance d'un deuxième dispositif (23) par l'intermédiaire d'un canal de communication sans fil ;
- vérification (E2) d'une aptitude du deuxième dispositif à exécuter le module logiciel d'abstraction ;
- lorsque le deuxième dispositif n'est pas apte à exécuter ledit module logiciel, allocation (E4) d'une adresse identifiant le deuxième dispositif dans le réseau résidentiel selon un format compatible avec l'exécution du module logiciel et exécution du module logiciel d'abstraction par le premier dispositif en tant que mandataire du deuxième dispositif.

2. Procédé de médiation selon la revendication 1, comprenant en outre, lorsqu'un troisième dispositif demandant à s'attacher au réseau résidentiel est apte à exécuter le module logiciel d'abstraction, une étape de vérification (E7) qu'une adresse identifiant le troisième dispositif dans le réseau résidentiel est distincte de l'adresse allouée au deuxième dispositif.

3. Procédé de médiation selon la revendication 1, comprenant en outre, lorsqu'un troisième dispositif demandant à s'attacher au réseau résidentiel est apte à exécuter le module logiciel d'abstraction, une étape de vérification qu'une adresse identifiant le troisième dispositif dans le réseau résidentiel est distincte de l'adresse allouée au deuxième dispositif, et dans le cas contraire, une étape d'allocation (F2) d'une nouvelle adresse au deuxième dispositif.

4. Procédé de médiation selon la revendication 3, dans lequel la nouvelle adresse allouée est utilisée lors de l'exécution du module logiciel en tant que mandataire du deuxième dispositif.

5. Procédé de médiation selon la revendication 4, comprenant une étape de diffusion (F4) au troisième dispositif de la nouvelle adresse allouée.

6. Procédé de médiation selon la revendication 3, dans lequel des données reçues par le premier dispositif à destination d'un dispositif identifié par ladite adresse sont dupliquées vers les deuxième et troisième dispositifs.

7. Dispositif de médiation appartenant à un réseau résidentiel (2), ledit dispositif comprenant :
- un module logiciel (305) d'abstraction offrant un service d'abstraction d'une technique de contrôle d'accès au media sous-jacente :
- un module de réception (304), agencé pour recevoir une demande d'attachement au réseau résidentiel en provenance d'un deuxième dispositif (23) par l'intermédiaire d'un canal de communication sans fil ;
- un module de vérification (306), agencé pour vérifier si le deuxième dispositif est apte à exécuter ledit module logiciel d'abstraction ;
- un module de commande (307), agencé pour allouer une adresse pour identifier le deuxième dispositif dans le réseau résidentiel selon un format compatible avec l'exécution du module logiciel d'abstraction et pour déclencher une exécution du module logiciel d'abstraction par le dispositif de médiation en tant que mandataire du deuxième dispositif, lorsque le deuxième dispositif n'est pas apte à exécuter ledit module logiciel d'abstraction.

8. Dispositif de médiation selon la revendication 7, agencé en outre pour permettre un accès à un réseau étendu à au moins un dispositif du réseau résidentiel.

9. Système de réseau résidentiel comprenant au moins un dispositif de médiation selon la revendication 7 et un dispositif comprenant un module d'interface, agencé pour envoyer et recevoir des données par l'intermédiaire du canal de communication sans fil.

10. Programme pour un dispositif de médiation, comprenant des instructions de code de programme destinées à commander l'exécution des étapes du procédé de médiation selon l'une des revendications 1 à 6, lorsque ledit programme est exécuté par ledit dispositif.

11. Support d'enregistrement lisible par un dispositif de médiation sur lequel est enregistré le programme selon la revendication 10.

## Patentansprüche

1. Vermittlungsverfahren, das von einem ersten Gerät (20) in einem Heimnetzwerk (2) implementiert wird, wobei ein Abstraktionssoftwaremodul, das einen Dienst zur Abstraktion einer darunterliegenden Technik zur Steuerung des Zugriffs auf das Medium anbietet, von dem ersten Gerät ausgeführt wird, wobei das Verfahren die folgenden Schritte umfasst:
- Empfangen (E1) einer von einem zweiten Gerät (23) kommenden Anforderung der Anmeldung beim Heimnetzwerk über einen drahtlosen Kommunikationskanal;
- Überprüfen (E2) einer Eignung des zweiten Geräts, das Abstraktionssoftwaremodul auszuführen;
- wenn das zweite Gerät nicht geeignet ist, das Softwaremodul auszuführen, Zuweisen (E4) einer Adresse, die das zweite Gerät im Heimnetzwerk identifiziert, gemäß einem mit der Ausführung des Softwaremoduls kompatiblen Format und Ausführen des Abstraktionssoftwaremoduls durch das erste Gerät als Stellvertreter des zweiten Geräts.

2. Vermittlungsverfahren nach Anspruch 1, umfassend ferner, wenn ein drittes Gerät, das anfordert, beim Heimnetzwerk angemeldet zu werden, geeignet ist, das Abstraktionssoftwaremodul auszuführen, einen Schritt des Überprüfens (E7), dass eine Adresse, die das dritte Gerät in dem Heimnetzwerk identifiziert, verschieden von der dem zweiten Gerät zugewiesenen Adresse ist.

3. Vermittlungsverfahren nach Anspruch 1, umfassend ferner, wenn ein drittes Gerät, das anfordert, beim Heimnetzwerk angemeldet zu werden, geeignet ist, das Abstraktionssoftwaremodul auszuführen, einen Schritt des Überprüfens, dass eine Adresse, die das dritte Gerät in dem Heimnetzwerk identifiziert, verschieden von der dem zweiten Gerät zugewiesenen Adresse ist, und im gegenteiligen Fall einen Schritt des Zuweisens (F2) einer neuen Adresse zu dem zweiten Gerät.

4. Vermittlungsverfahren nach Anspruch 3, bei dem die zugewiesene neue Adresse bei der Ausführung des Softwaremoduls als Stellvertreter des zweiten Geräts verwendet wird.

5. Vermittlungsverfahren nach Anspruch 4, umfassend einen Schritt des Aussendens (F4) der zugewiesenen neuen Adresse an das dritte Gerät.

6. Vermittlungsverfahren nach Anspruch 3, bei dem Daten, die vom ersten Gerät empfangen werden und für ein durch die Adresse identifiziertes Gerät bestimmt sind, zu dem zweiten und dritten Gerät dupliziert werden.

7. Vermittlungsvorrichtung, die zu einem Heimnetzwerk (2) gehört, wobei die Vorrichtung umfasst:
- ein Softwareabstraktionsmodul (305), das einen Dienst zur Abstraktion einer darunterliegenden Technik zur Steuerung des Zugriffs auf das Medium anbietet;
- ein Empfangsmodul (304), das dazu eingerichtet ist, eine Anforderung der Anmeldung beim Heimnetzwerk von einem zweiten Gerät (23) über einen drahtlosen Kommunikationskanal zu empfangen;
- ein Überprüfungsmodul (306), das dazu eingerichtet ist zu überprüfen, ob das zweite Gerät geeignet ist, das Abstraktionssoftwaremodul auszuführen;
- ein Steuerungsmodul (307), das dazu eingerichtet ist, eine Adresse gemäß einem mit der Ausführung des Abstraktionssoftwaremoduls kompatiblen Format zuzuweisen, um das zweite Gerät in dem Heimnetzwerk zu identifizieren, und eine Ausführung des Abstraktionssoftwaremoduls durch die Vermittlungsvorrichtung als Stellvertreter des zweiten Geräts auszulösen, wenn das zweite Gerät nicht geeignet ist, das Abstraktionssoftwaremodul auszuführen.

8. Vermittlungsvorrichtung nach Anspruch 7, die ferner dazu eingerichtet ist, mindestens einem Gerät des Heimnetzwerks einen Zugriff auf ein Weitverkehrsnetz zu ermöglichen.

9. Heimnetzwerksystem, umfassend mindestens eine Vermittlungsvorrichtung nach Anspruch 7 und ein Gerät, das ein Schnittstellenmodul umfasst und dazu eingerichtet ist, Daten über den drahtlosen Kommunikationskanal zu senden und zu empfangen.

10. Programm für eine Vermittlungsvorrichtung, das Programmcodeanweisungen umfasst, die dazu bestimmt sind, bei der Ausführung des Programms durch das Gerät die Ausführung der Schritte des Vermittlungsverfahrens nach einem der Ansprüche 1 bis 6 zu steuern.

11. Speichermedium, das von einer Vermittlungsvorrichtung lesbar ist und auf dem das Programm nach Anspruch 10 gespeichert ist.

## Claims

1. Mediation method implemented by a first device (20) in a residential network (2), a software abstraction module offering an abstraction service of a technique for controlling access to the underlying media being executed by the first device, said method comprising the steps of:
- receiving (E1) a request to join the residential network from a second device (23) via a wireless communication channel;
- verifying (E2) whether the second device is capable of executing the software abstraction module;
- when the second device is not capable of executing said software module, allocating (E4) an address identifying the second device in the residential network according to a format compatible with the execution of the software module and execution of the software abstraction module by the first device as a proxy of the second device.

2. Mediation method according to Claim 1, when a third device requesting to join the residential network is capable of executing the software abstraction module, further comprising a step of verifying (E7) that an address identifying the third device in the residential network is distinct from the address allocated to the second device.

3. Mediation method according to Claim 1, when a third device requesting to join the residential network is capable of executing the software abstraction module, further comprising a step of verifying that an address identifying the third device in the residential network is distinct from the address allocated to the second device, and if not, a step of allocating (F2) a new address to the second device.

4. Mediation method according to Claim 3, in which the allocated new address is used during the execution of the software module as a proxy of the second device.

5. Mediation method according to Claim 4, comprising a step of broadcasting (F4) the allocated new address to the third device.

6. Mediation method according to Claim 3, in which data received by the first device intended for a device identified by said address is duplicated to the second and third devices.

7. Mediation device belonging to a residential network (2), said device comprising:
- a software abstraction module (305) offering an abstraction service of a technique for controlling access to the underlying media;
- a receiving module (304), arranged for receiving a request to join the residential network from a second device (23) via a wireless communication channel;
- a verification module (306), arranged for verifying whether the second device is capable of executing said software abstraction module;
- a control module (307), arranged for allocating an address for identifying the second device in the residential network according to a format compatible with the execution of the software abstraction module and for triggering an execution of the software abstraction module by the mediation device as a proxy of the second device, when the second device is not capable of executing said software abstraction module.

8. Mediation device according to Claim 7, further arranged for enabling access to a wide area network to at least one device of the residential network.

9. Residential network system comprising at least one mediation device according to Claim 7 and a device comprising an interface module, arranged for sending and receiving data via the wireless communication channel.

10. Program for a mediation device, comprising program code instructions intended to control the execution of the steps of the mediation method according to one of Claims 1 to 6, when said program is executed by said device.

11. Recording medium readable by a mediation device on which the program according to Claim 10 is recorded.
